# EUROPEAN PATENT APPLICATION

(11) **EP 1 986 131 A2**
(43) Date of publication of application: **29.10.2008**
(21) Application number: 08008024.5
(22) Date of filing: 25.04.2008
(51) Int. Cl.: G06K 9/52

(54) **Method and programmable product for unique document identification using stock and content**

(30) Priority: 26.04.2007 US 908000 P; 24.07.2007 US 951640 P; 17.10.2007 US 980621 P
(71) Applicant: Bowe Bell + Howell Company, Wheeling IL 60090-6232 (US)
(72) Inventor: Conard, Walter S., Lake Villa, Illinois 60046 (US); Spitzig, Roger, St. Clements Ontario N0B2M0 (CA)
(74) Representative: Zimmermann, Tankred Klaus

(57) **Abstract**

The present application relates to a method for authenticating and tracking of documents. More specifically the present application relates to authenticating and tracking of a document throughout its lifecycle without reliance upon or requirement for any unique identification characters, barcodes and/or objects that were added to the document specifically for the purpose of identification.

## Description

### Related Applications

This application claims the benefit of U.S. Provisional Application No. 60/980,621, filed October 17, 2007 entitled "Method and Programmable Product for Unique Document Identification Using Stock and Content," U.S. Provisional Application No. 60/908,000, filed April 26, 2007 entitled "Apparatus, Method and Program Product for Identification of a Document with Feature Analysis" and U.S. Provisional Application No. 60/951,640, filed July 24, 2007 entitled "Document Processing System Control Using Document Feature Analysis for Identification", the disclosures of which also are entirely incorporated herein by reference.

### Technical Field

The present subject matter relates to a method for authentication and tracking of documents. More specifically the present subject matter relates to authenticating and tracking of a document throughout its lifecycle without reliance upon or requirement for any unique identification characters, barcodes and/or objects that were added to the document specifically for the purpose of identification.

### Background

The need to have technology for authentication and tracking of a paper document is becoming a higher priority as security issues abound and technology improves in areas that enhance the ability of criminals to make high quality forgeries. Numerous techniques have been employed to authenticate a document such as barcodes, water marks, holographic images, or embossed or raised seals. These techniques do not easily offer a different value for each document or each page of a multiple page document and are more easily defeated.

Radio frequency identification (RFID) technology, other inhomogeneous media capable of being interrogated by way of detecting optical scattering from the material, or optical scanners capable of detecting paper fiber orientation can yield arbitrarily random results that are extremely improbable to be repeated. RFID is a broad field of technology covering material or devices that respond to radio frequency illumination. These devices may include but are not limited to active devices that radiate a result when interrogated or passive devices that re-radiate a result when illuminated, wherein the passive devices may include but are not limited to semiconductor devices, material deposited on a substrate, printed material or fibers contained in the paper. For instance, paper stock may be embedded accordingly with RFID fibers for unique identification purposes. However, the identification of the paper stock as originated from an authenticated source is insufficient to validate a document as the original if the actual content to be marked upon the document is not known. An example is the fraudulent activity known as check washing, wherein a check marked by a remitter with valid amount payable data is washed off using chemical ink removal techniques; the valid amount payable data being subsequently replaced with higher (fraudulent) amount payable data. Even a check having an assigned RFID signature would not be protected against instances wherein the hardcopy document is indeed authentic, but the original content data as marked thereon is not.

Thus, there is a need in the existing art for improved methods for maintaining secure tracking and authentication of documents.

### Summary

The teachings herein alleviate one or more of the above noted problems with document security and tracking and authentication of documents.

One object of the present subject matter is to provide a method of preparing a document for later authentication. The document is printed on identifiable stock. The method includes acquiring stock identification data from a printed hardcopy of the document by a first sensor coupled with document processing equipment. Content data is obtained for the document and associated with the stock identification data. The content data and stock identification data is stored in a database.

Another object of the present subject matter is to provide a method of authenticating a document printed on identifiable stock. The method includes acquiring stock identification data from a printed hardcopy of the document by a first sensor coupled with document processing equipment. Content data is obtained from an image of the printed hardcopy of the document by a second sensor coupled with the document processing equipment. The content data and stock identification data are compared with associated content data and stock identification data stored in a database. An authentication result is returned indicating whether or not the content data and stock identification data matches with the stored content data and stock identification data in the database.

Yet another object is to provide a method of generating a plurality of mailpieces containing inserts on document processing equipment for later authentication of the inserts. The method includes associating addressee and/or address data with each of a plurality of inserts printed on identifiable stock. Stock identification data is acquired from each of the plurality of inserts with a sensor. Insert classification data is obtained for the plurality of inserts. The associated address and/or addressee data, acquired stock identification data and obtained insert classification data are stored in a database. The mailpieces containing the insert are generated on the document processing equipment.

Still yet another object of the present subject matter is to provide a method of authenticating a mailpiece insert printed on identifiable stock. The method includes obtaining stock identification data from the mailpiece insert. The stock identification data is compared with associated stock identification data stored in a database. Address and/or addressee data stored in the database is gathered based on a result of the comparing step. Insert classification data associated with the plurality of mailpieces is acquired from the database. A report associating the insert classification data with the obtained address and/or addressee data is generated.

Additional advantages and novel features will be set forth in part in the description which follows, and in part will become apparent to those skilled in the art upon examination of the following and the accompanying drawings or may be learned by production or operation of the examples. The advantages of the present teachings may be realized and attained by practice or use of various aspects of the methodologies, instrumentalities and combinations set forth in the detailed examples discussed below.

### Brief Description of the Drawings

The drawing figures depict one or more implementations in accord with the present teachings, by way of example only, not by way of limitation. In the figures, like reference numerals refer to the same or similar elements.

Fig. 1 Exemplary diagram for collecting document ID data at the point of origin.

Fig. 2 Exemplary diagram for authenticating a document when it is subsequently observed.

FIGS. 3a and 3b Exemplary flow diagrams for document data collection and document authentication respectively.

Fig. 4 Exemplary diagram for preparing mail pieces that contain identifiable paper stock such as a coupon or plastic card and creating a mailpiece.

Fig. 5 Exemplary diagram for processing inserts with stock ID and tracking the addressee that received the items.

Fig. 6 Exemplary flow chart of tracking inserts with stock ID.

### Detailed Description

In the following detailed description, numerous specific details are set forth by way of examples in order to provide a thorough understanding of the relevant teachings. However, it should be apparent to those skilled in the art that the present teachings may be practiced without such details. In other instances, well known methods, procedures, components, and circuitry have been described at a relatively high-level, without detail, in order to avoid unnecessarily obscuring aspects of the present teachings.

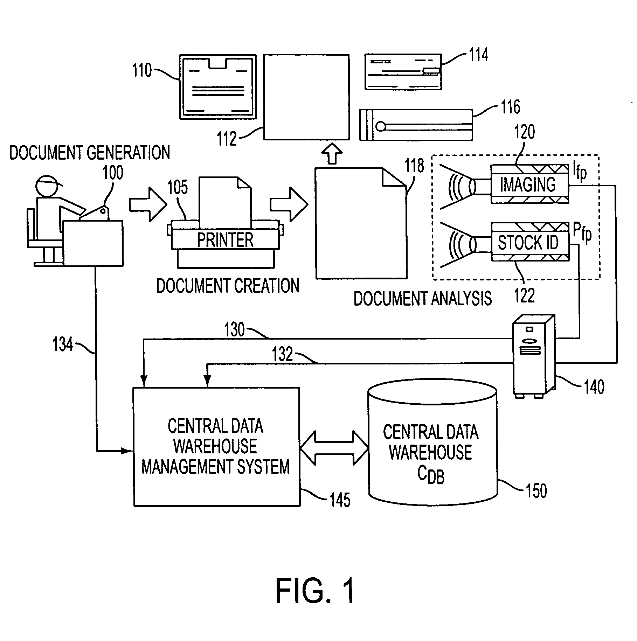

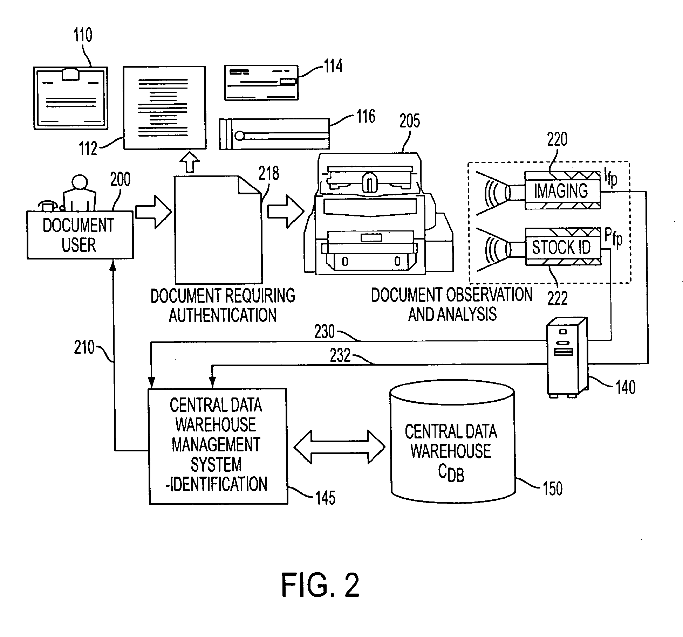

Reference now is made in detail to the examples illustrated in the accompanying drawings and discussed below. FIG. 1 illustrates the start of the authenticated high value document creation process 100. All of the documents are printed 105 on paper stock that can be uniquely identified using sensors and analysis tools of various types 122 such an RFID interrogator/analysis tool capable of detecting and analyzing embedded conductors, using an inhomogeneous media which is interrogated by a coherent light beam or high magnification imaging capable of recognizing paper fibers. RFID is a broad field of technology covering material or devices that respond to radio frequency illumination. These devices may include but are not limited to active devices that radiate a result when interrogated or passive devices that reradiate a result when illuminated, wherein the passive devices may include but are not limited to semiconductor devices, material deposited on a substrate, printed material or fibers contained in the paper. The completed high value document 118 can be any of numerous types such as certificate 110, and contract 112, a check 114 or a coupon 116. If the printed content is not known from step 100, an imaging sensor 120 coupled with an extractor module 140 is used to capture an image of and subsequently interpret the contents of the printed material using standard or advanced OCR technology. Concurrently, the paper stock identification is read using the stock ID sensors 122 (e.g., RFID analysis tool). Sensors 120 and 122 are integrated into a document processor including, but not limited to, a scanner or copier. Other document processing devices are contemplated and readily understood by those skilled in the art. The output of the extractor module 140 is information about the content of the document 132 and its stock ID 130. This information is sent to the central data warehouse management system 145 where it is combined with metadata about the document 134. The metadata typically contains information about the document such as when it was created and what type of document was created (a will, deed, stock, mortgage). If the printed content is known and is transferred to the central data warehouse management system 145, this data may be used instead of the OCR data 132. The process is not dependent on the data transfer 134 from the document generation system 100, but added metadata is valuable and OCR errors are eliminated. All of the collected data 130, 132, 134 is stored in the central data warehouse 150 for later use during the authentication process shown in FIG. 2.

FIG. 2 illustrates the document authentication process starting with a document user 200 who has been presented with a document 218 to process and authenticate. In this exemplary example, the document 218 as received is one of the high value type as described respective to document 118 of FIG. 1 above. When presented with a document, the document user 200 does not know if the document 218 presented matches the original 118 or not. With this in mind, the document 218 is first processed by a document processing system such as a scanner 205 that is equipped with an imaging sensor 220 and a stock ID sensor 222. Coupled to the extractor module 140, the stock ID sensor 222 and imaging sensor 220 process the data accordingly, to generate its unique stock ID 230 and content data 232, respectively. The central data warehouse management system 145, which includes an identification, matching and authentication techniques commonly used by those skilled in the art to match data with entries in a database, such as the central data warehouse 150 which is used to process the stock ID 230 and content data 232 and attempt to find a match in the central data warehouse 150. Since both the stock and content information can be validated-as such data was placed accordingly into the database during the time of document creation-it is possible to certify that the document is an original and has not been modified. If modifications to the content are detected, however, these discrepancies will be reported to the document user 200 by way of a user interface (not shown). If all data is confirmed, the document user 200 may receive the authentication indication along with any metadata 210 relevant to said document 218.

Numerous configurations are possible to accomplish the document processing and authentication tasks described above respective to FIGS. 1 and 2. All items and/or processes depicted in exemplary FIGS. 1 and 2 can be located centrally (e.g., a government office) or the items and/or processes may be distributed across a wide geographic area (e.g., one or more of a city, state or country). If the process is distributed, each element 100 or 200 would be connected over a WAN or a secure internet connection to a remote central processing system running on a server and able to handle numerous document authentication requests simultaneously.

Also, the central data warehouse 150 as presented herein is intended to apply to any system, source or type of electronic data that is searchable or accessible by one or more computers and/or computer executables, and is not intended to be limited by any particular hardware or software implementation. The central data warehouse 150 may be implemented in centralized or distributed fashion (e.g., as a collection of one or more computer or server systems in accord with various models and design methodologies for achieving varying operational and functional purposes. Furthermore, the central data warehouse 150 may be managed by a management system 145, wherein various hardware, software and network system configurations may be employed. Storage mediums upon which the central data warehouse 150 may be implemented or maintained may include, but are not limited to, disk storage such as DASD, RAID, or other mediums of varying volatility. The central data warehouse 150 may be implemented upon such mediums in accord with varying database file structures, languages or methodologies, including but not limited to Structured Query Language (SQL), Extensible Markup Language (XML), ordered/unordered flat files, Indexed Sequential Access Method (ISAM), heaps, hash buckets or Quaternary trees (B+ Trees). Those skilled in the art will select the combination of hardware and software according to their architectural requirements.

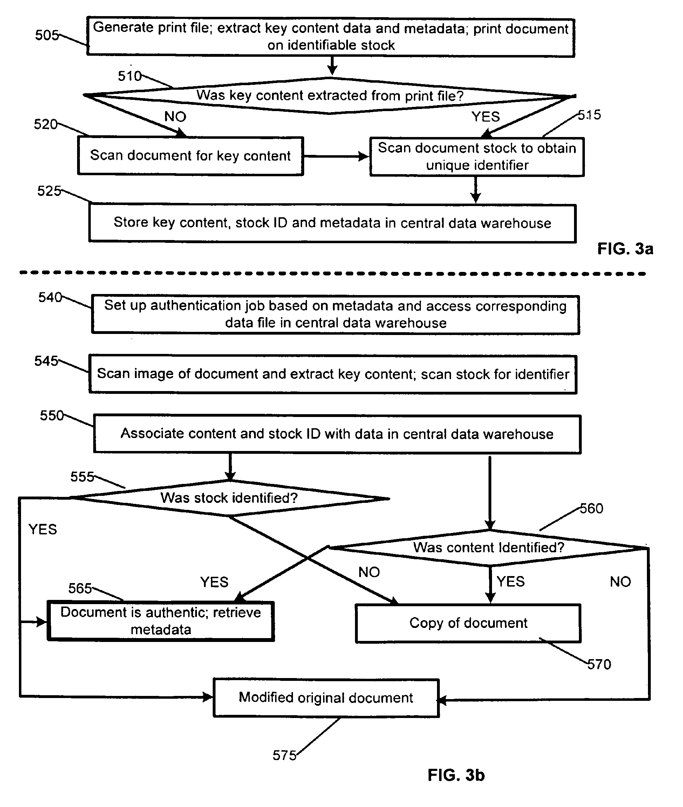

FIGS. 3a and 3b, which highlight an example of a process flow for document authentication, are now explained. FIG. 3a illustrates the steps associated with collecting data associated with a document. In step 505, a print file is generated which contains the contents to be printed on the stock or added to pre-printed stock as maybe the case for documents such as certificates, deeds or other similar documents. Key document contents are extracted from the print data and merged with metadata. The content data alternately maybe extracted from the source documents used to generate the print file. This information is then printed on stock that has characteristics that enable unique identification. An alternate approach for content extraction is used if the data was not obtained from electronic files (step 510). If content data is not available (step 515) the document will be imaged and the content is extracted using optical character recognition techniques. In either case the document is scanned to acquire the unique stock identification (step 520). The combined data of unique stock ID 130, content data 132 and metadata 134 are compiled by the central data warehouse management system 145 and stored in the central data warehouse 150 for later recall for recognition and authentication of the document (step 525).

FIG. 3b illustrates the steps associated with authenticating a document on subsequent observation. In step 540, the authentication job is set up using metadata such as the type of document (deed, certificate, will or other high value documents) and the date when the document was created. The setup needs to collect and enter sufficient data for the central data warehouse management system 145 to locate the correct data file that contains the data which relates the document or group of documents to be authenticated. Selecting the correct file depends on how the metadata becomes available. However, if insufficient metadata is available to identify the correct file, a broad search for the records in the central data warehouse 150 will be done to acquire the correct file as part of step 550 after the document is scanned. In step 545, the document is imaged with sensor 220 and then the image is processed to extract the content. In addition, the stock ID sensor 222 is used to obtain the stock unique identifier. With both the content data and the stock ID, the central data warehouse management system will search a specific group of files, if metadata was available or the whole central data warehouse 150 to find a match to the document, step 550. If a match was found for the stock identifier (step 555) and for the content (step 560), the document can be certified as authentic (step 565). Otherwise, if the stock identifier matches, but the content does not match the original document, the document may have been modified and maybe a fraud (step 575). Similarly, if the content matches, but the stock identifier does not match, the document is a copy and, therefore, can not be authenticated (step 575).

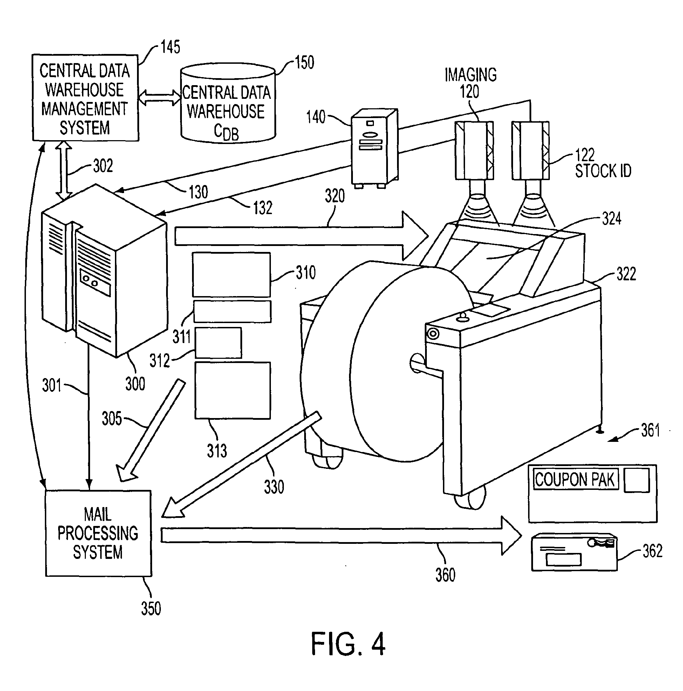

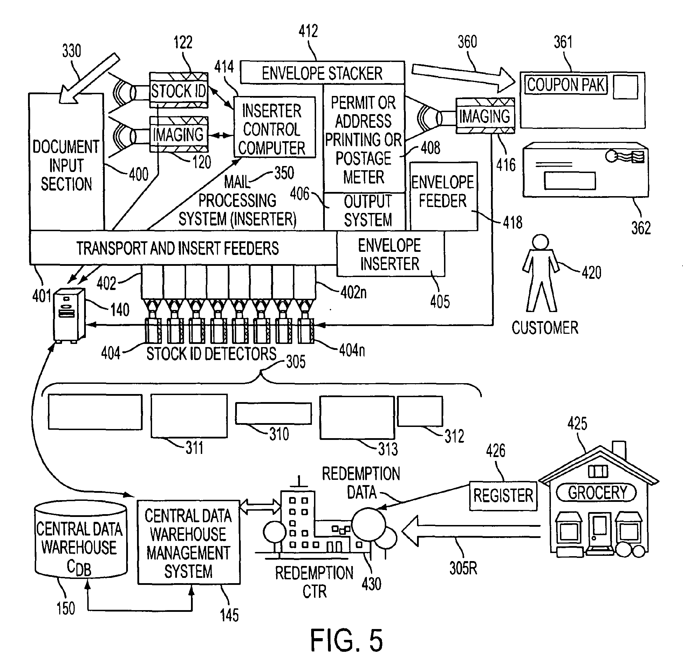

FIGS. 4 in association with FIG. 5 illustrate the process of preparing mailpieces that contain identifiable paper stock, such as a document of one or more pages, a coupon or plastic card, and for creating a mailpiece. One objective of this process is to enable association of a mailpiece insert 305, which may be a coupon 310, 311 or a plastic card such as a credit card 312, driver's license 313 or other high value inserts, with the addressee and/or address on the mailpiece. The process allows for the association of the addressee and/or address with the insert 305 FIG. 5 when it is present for use. For example, this includes authenticating the name and address on a driver's license 313 or authenticating the name on a credit card 312. Both authentications are performed by scanning the stock ID of the presented item against data in the central data warehouse 150. If a match is found between the stock ID and the database, metadata can be retrieved containing such items as name, address, security questions, DOB and other information that those skilled in the art deem useful. Another objective is to recognize a coupon 310, 311 based on matching the stock ID for the coupon against the central data warehouse 150. By utilizing a central data warehouse 150 to access the addressee and insert identification data, based on the stock ID match, the addressee that used a coupon can be determined at the redemption center or at the point of sale. If data is collected at the point of sale (POS), each POS will be connected to the central data warehouse management system so that the stock identification can be made and collected metadata can be returned. The resulting data can be used for marketing research and to verify the coupon owner, the value of the coupon service, point of sale, item purchased and any other data that those skilled in the art may find useful for analysis. These data items maybe added to the central data warehouse 150 as metadata for later analysis or compiled into a separate printable report or added to separate data structure.

The exemplary computer processing architecture of FIG. 4 can be configured in numerous ways without affecting the concept functionality. The key processors are the Data Center Processor 300 which is the source of print files 320 that are used to control the document printer 322 and to provide inserter control data 301 to the mail processing system 350 control and computer 414 of FIG. 5. The data center processor 300 also communicates 302 with the central data warehouse management system 145 to provide document and insert metadata, addressee data and captured unique stock ID 130 and content data 130. Alternately, the document and insert content data may come directly from data files in the data center processor 300. The extractor module 140 may be a separate processor which is used to read the content information 132 that is derived from an imaging sensor 120 and to read the stock ID with the appropriate sensor such as a RFID analysis tool 122. The identification code is processed by the extractor module 140 to produce the stock ID 130. The inserts 305, coupons 310, 311, plastic cards 312 and driver's licenses 313 are all created by a separate process (not shown) where information is printed on paper stock or plastic material that can be uniquely identified by the appropriate sensor 122. One method is to embed conductive fibers in the material that can then be read with an RFID sensor to produce a unique identification number or identification signature that will not be repeated in a prescribed period of time, as defined by the postal authority or business process. For example, value documents may have to be unique for hundreds of years while coupons may only require months of uniqueness. The inserter control computer 414 will control the addition of the inserts to a given document that contains both custom printed material 330 and inserts both of which are stuffed into the same envelope 362. Alternately, the finished envelope 361 may contain only coupons. The net result is finished mailpieces 360 that are provided to the postal authority for delivery to a postal customer.

The exemplary process steps are as follows. The data center processor 300 provides a print file 320 to the printer 322 to control content and addressee printing. If document identification is required the paper stock will contain unique identification features. When the document is printed 324 imaging 120 and stock ID 122 sensors verify the printing, capture content and addressee, and associate the printed document with its stock identification using the extractor module 140. This data will be provided to the central data warehouse management system 145 where it is correlated with additional data from the mail processing system 305 which is derived during the mailpiece production (FIG. 5). The data is stored in the central data warehouse 150 for later reuse. Processing steps as described herein may be adapted accordingly by those skilled in the art.

FIG. 5 illustrates the processing steps associated with the utilization of stock identification to track items in a mail processing environment through a coupon redemption center. In some cases the redemption center may not process the physical coupons, but use a distributed process which uses point of sale devices to recognize the coupon type and read the unique stock ID If the document which is included in the envelope with tracked coupons or tracked plastic cards is being tracked, a process similar to that described for FIGS. 1 and 2 will be utilized. In a mail processing system 350, such as an inserter, one or more analysis tools, sensors, or a suite of various sensors/tools, depicted as 120, 122, 416, 404-404n and the like may operate upon a document being processed. The analysis tools may be positioned inline at various points along the inserter 350 for analyzing the documents in real-time, or alternatively offline for post-inserter processing analysis. For example, the analysis tools 120, 122, 416 and 404-404n are high speed imaging devices (e.g., readers, cameras, etc.) for acquiring and/or interpreting the content markings that appear on a scanned document and high speed paper stock or plastic card stock identification sensors. Coupled to the inserter 350 is a control computer 414, which may provide a user interface that enables an operator of the inserter 350 to interact with inserter control software that runs the inserter. Alternatively, the inserter control computer 414 may also be coupled to an extractor module 140, which may be further coupled to additional analysis tools-i.e., high resolution cameras and radio frequency analysis devices 120, 122, 416, 404-404n-for detecting stock data respective to hardcopy documents being processed. Those skilled in the art will recognize of course, that various implementations may be employed other than that depicted herein. It should be noted that the inserter computer 414 is typically in control of all elements of the inserter 350 so that assembly of the finished mailpiece 360 is correctly preformed and each step is verified as it is accomplished. The inserter control computer 414 tracks the location of all the material that is being assembled to form a mailpiece 361, 362. As a result the components of the mailpiece can be tracked to the address and addressee and associated with the insert type that was added to a mailpiece by each insert feeder 402-402n. The stock ID detectors (scanners) 404-404n obtain the stock ID for each insert as it is added to the material being assembled for a mailpiece. The insert type, stock ID and addressee and/or address are collect with the inserter control computer 414, the extractor module 140 and transferred to the central data warehouse management system 145 for storage in the central data warehouse 150.

As a first exemplary point of observation, the analysis tool/sensing device may observe a document as it is engaged in front-end inserter processing activities. Such activities may include loading the printed material 330 into the document input section 400 of the inserter 350, wherein the printed material may be cut or folded accordingly to construct a document of desired size. Generally, the roll of paper is printed in advance by one or more printer modules (not shown) to display the various objects and/or characters that comprise the human or machine readable content of the document. In the case of a camera being employed as the analysis tool 120, image data pertaining to the document may be compiled and translated into content data by the extractor module 140. Likewise, a radio frequency analysis system (stock ID sensor 122 coupled with the extractor module 140) may be utilized correspondingly for acquiring stock identification data. An extractor module 140 may be integrated with and/or communicable with the suite of analysis tools/sensors 120 and 122. As before, stock and content data may be persistently stored by the extractor module 140 during the time of document analysis. This data is then aggregated and packaged into a data structure, which may subsequently be analyzed against data maintained in the central data warehouse 150.

Also, as indicated before, various content data elements of interest may include word count per page, tab spacing and indentation lengths, margin lengths, number of paragraphs, number of lines, character and/or object coordinate information, and any other data descriptive of the physical appearance of the hardcopy document. Fold and/or cut line location data may also be stored, such as by determining the distance from an edge of the paper to a point of contact with a cutter as measured from an image depicting this point of contact. Stock data associated with the structural composition of the document may include radio frequency data as emitted by intentionally embedded conductive fibers which will reradiate a unique signature when interrogated by a RFID sensor. Alternatively, reflectance and contrast data, paper density, or paper texture information may also be employed as stock identification data. Also, in association with the stock and content data, the extractor module 140 may compile metadata information created by the imaging device 122 as it processes a document. In particular, the metadata may include timestamp information, machine ID, machine location components assembled into a mailpiece, etc. By associating the metadata with the stock and content or insert type data collected during inserter processing, a historical account of the activities involving document or insert is maintained.

The data collection process continues at the other analysis points along the inserter 350, including during accumulation and merging of the various inserts 305 with a document and envelope insertion-as performed by the transport 401 and insert feeders 402-402n and envelope inserter 405. In the case of accumulation and document merging and envelope insertion by the envelope feeder 418, this involves the association of varying inserts 305 with a given document being transported through the transport system in order to compile a distinct mailpiece. For example, when the inserts are one or more coupons 305, different documents intended for differing recipients may require different coupons (i.e., target marketing). One or more analysis tools 404-404n may be employed for performing analysis upon documents at this stage of inserter processing. These devices may be physically placed in proximity to the insert feeders 402-402n so as enable acquisition and/or extraction of content and stock identification data pertinent to the inserts being merged with an associated document. In this way, a correlation between the document being processed plus addressee through the inserter 350 and the inserts may be achieved, which may provide further tracking or analysis implications.

Further stock and content data may be acquired and/or identified at the output system 406 of the inserter 350. Still further, stock and content data may be extracted by the extractor module 140 at the point of processing by other devices 408, including those for applying postage marks, printer marks, address data, labels or other physical manipulations to the hardcopy document. In the case where the mailpiece will contain only coupons 361, the address is printed at section 408 in the inserter. The address and addressee are associated with the insert 305 stock identifications for the items in the envelope. Inline devices may include, but are not limited to, postage meter systems, postage application devices, printers, or labelers. In some instances, these other inline devices may be designated as an analysis tool, and thus may be integrated with an extractor module 140 for enabling the generation of stock and content data. For example, a postage meter enabled with a sensor 120, 122 connected to the extractor module 140 could record postage affixed data as applied to a document as stock and content data. Doing so creates an additional audit trail that could be useful for the user/operator or postal authority in reconciling postage payment discrepancies. Such content and or stock data may be acquired through usage of a sensor or sensor suite 416 placed in proximity to said inline processing devices, which are themselves generally positioned prior to entry of the finished mailpieces 360 into the envelope stacker 412.

Tracking of documents from printed stock 330 and inserts 305 into a specific envelope with a known addressee and address is required for accurate performance of the concept. This function is performed with the inserter control computer 414 in conjunction with the inserter control file 301 which specifies how the mailpiece is to be assembled. A document is identified by sensors 120 and 122 when it is received in the documents input section 401 and then tracked through each step of the insertion process. When the document reaches the first insert feeder 402, the inserter control computer 414 will determine if that insert is required. If it is required the sensor 404 will read the stock ID and associate it with the known contents of that insert feeder. This data is appended to the document data of address and addressee plus metadata if available. This process is repeated at each insert feeder until the last feeder is reached 402n. Therefore, when the documents and inserts reach the envelope inserter 405, the exact contents is known plus the stock ID for each item contained in the envelope. The resulting data file is sent to the central data warehouse management system 145 from a combination of the extractor module 140, inserter control computer 414 and the data center processor 300 as dictated by the specific design. The data is stored in the central data warehouse 150 for later usage.

Alternately, if only coupons are being inserted into an envelope, the document input section 400 is not required. The inserter control computer 414 will track each insert that is added to a group of inserts as the groups are moved through the transport 401. Hence, when the group reaches the envelope inserter 405, the contents of each coupon is known along with its stock identification that was read by each detector 404 through 404n. Since the address and addressee is not yet associated with the envelope, tracking of the envelope with its known contents must continue until the address and addressee are printed on the envelope at section 408. Alternate configurations of the mail processing system 350 are common such as replacing the envelope feeder 418 and envelope inserter 405 with a warping system that manufactures the envelope during production. At this point all information is known and transferred to the central data warehouse 150.

Attention is now directed towards the central data warehouse management system 145. Once the final document is complete-i.e., the coupons 361 are assembled for delivery or an envelope 362 containing a document and inserts-it is ready for distribution to the intended recipient or customer 420. When the customer utilizes the coupons 305R at a participating store 425, the coupon is collected at the store, and further redeemed via a redemption center 430. The redemption center 430 may use a distributed process to collect redemption data at the store 425 using a POS device 426 equipped with a stock ID sensor 122. A coupon identification sensor also is required which may include an imaging system or a barcode reader. This approach allows for collection of additional data in regard to the sale and saves the effort of sending the coupon to the redemption center. As an added feature, coupon reuse can be prevented by not allowing a coupon to be reused once the stock ID has been associated with redemption. The redemption center may be equipped with the same types of analysis tools for acquiring stock and content data as described above. Hence, the stock and content data is stored as a data structure by an extractor module 140 operable in connection with the redemption center 430. This data is then transmitted to the central data warehouse management system 145 (e.g., internal or external transmission).

The central data warehouse management system 145 extracts the data populating each field of the data structure, performs any decomposition/formatting of the data if required, then checks the central data warehouse 150 to determine if it matches any existing stock and content data. The match determination process, as recognized by those skilled in the art, may be executed using varying types of matching algorithms and/or logical instructions. Furthermore, the match determination process may be performed in accord with match sensitivity settings so as to enable high-confidence or threshold based (e.g., specified percentage match) evaluation of the stock and content data against data within the minutiae database. For example, if the match threshold/sensitivity is set to 75%, then a stock and content data set matching less than 75% of any other data sets within the database would be considered a non-match. Suffice to say, any effective or known means of match determination processing is within the scope of the teachings herein.

In transmitting the stock and content data to the central data warehouse management system 145, it may be compared to determine if it matches any existing stock and content data previously associated with the document via a document identification value. If a match is determined, an identification alert may be transmitted to the error tracking or fraud prevention group of the redemption center 430. Additionally, the data on record may be updated to include additional stock and content data not previously identified (e.g., a pen mark applied by the recipient to the physical document 502), as well as the updating of any metadata (e.g., time stamp data, analysis tool ID data, recipient ID data). The central data warehouse may be implemented via a server, wherein all document identification values and their associated stock and content data and/or metadata information is stored.

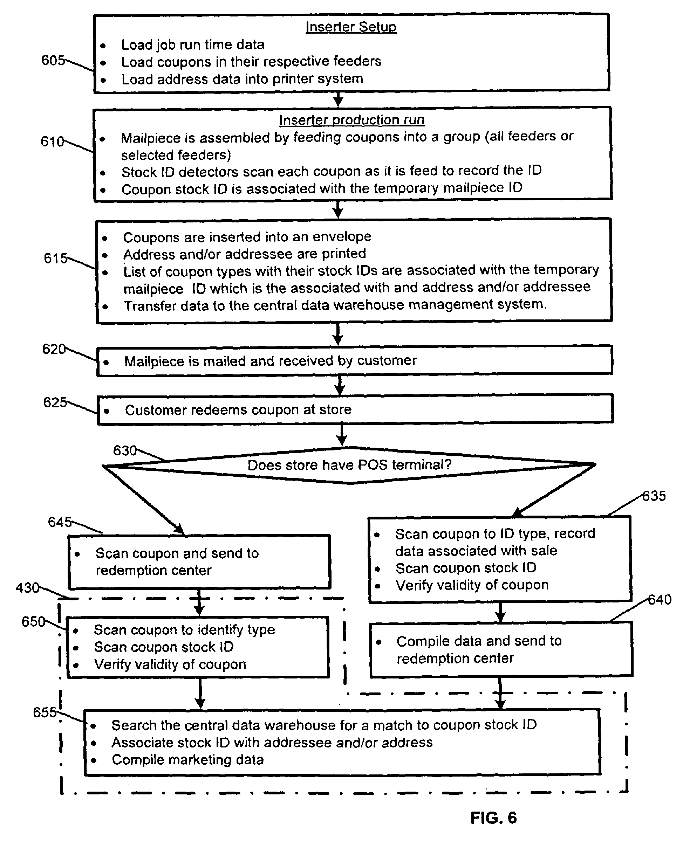

Referring now to FIG. 6 which is an exemplary flow cart of a coupon redemption system where coupons are assembled into the mailpiece 361. The document processing system inserting device is initially setup with the data and material needed for operation in step 605. The coupons are loaded into their respective feeders and address data to be printed on the envelopes is loaded into the printer. The coupons maybe loaded as packages of pre-processed groups and fed as a group into the inserting device. In this case, each group is identical and the stock ID for each coupon is pre-scanned. The necessary data file also is provided as part of setup. During the inserter production run (step 610), the mailpiece content of coupons is assembled from the pre-processed groups, if used, and from the insert feeders 420-402n. All feeders can add a coupon to each mailpiece or only selected feeders can be used depending on the inserter control file instructions. The stock ID detectors 404-404n are used to record the stock ID of each coupon as it is fed. The inserter control computer 414 tracks each group of coupons as it moves through the inserting device. A temporary document ID is often created to aid in association of the data with each group of coupons that are being created. In step 615, coupons are inserted into an envelope and the addressee and address are printed on the envelope. The temporary mailpiece ID is used to aid in the data association with the list of coupon types and stock IDs plus address and/or addressee information. Having both address and addressee data is the most useful for the eventual market data compilation, but in some instances, the addressee is often identified only as "resident". In this case the address is the primary means of identification of the coupon user. The complete data for each mailpiece is transferred to the central data warehouse management system 145 for storage. The mailpiece is then delivered by the postal service (step 620).

Continuing with FIG. 6, a customer receives the mailpiece and selects coupons to redeem at the store 425 (step 625). If the store does not have a point of sale terminal which is equipped to identify the coupon type, i.e. read the coupon barcode, and read the coupon stock ID (step 630), the coupon must be forwarded to the redemption center, step 645. If the POS is equipped with the necessary scanners, the coupon type and stock ID can be read and the data associated with the sale also can be recorded at the store (step 635). A coupon validity check can be made to see if the coupon has already been used for redemption. The data associated with the transaction is compiled and transferred to the redemption center (step 640). In the case where the coupons are received at the redemption center 420, the coupon type, stock ID and validity must be checked (step 650). Finally, the coupon type and stock ID data are used to obtain a match with the stored data in the central data warehouse by matching systems in the central data warehouse management system 145. When a match occurs the addressee and/or address data can be associated with the coupon data and POS data to build a product marketing profile of the person and/or persons at the residence (step 655).

Data processing-i.e., stock and content data or metadata collection-is performed by an extractor module 140, an executable module integrated with and/or communicable with a process, device or utility (e.g., software, hardware, or firmware processes or tools) capable of operating upon a hardcopy document. The extractor module 140 operates to extract stock and/or content data made available by hardcopy documents. Moreover, the extractor module 140 is deployable for independent operation upon or integration with the various devices or utilities usable for analysis of hardcopy documents. In this way, a plurality of extractor modules may relay information to each other if necessary and/or communicate with a central data warehouse management system 145. In addition, the extractor module 140 may also communicate with the particular device, tool (e.g., software) or process it is operating in association, i.e., to provide tracking information or ID notification data.

The central data warehouse management system 145 is a device (e.g., server), executable module or process that analyzes document stock and content data provided by an extractor module 140 in the form of a data structure. In other instances, the central data warehouse management system 145 communicates relevant information pertaining to a document to the extractor module 140. In general, the central data warehouse management system 145 processes the various fields of the data structure in order to access the data contents therein, and then executes a comparison of the document stock and content data received against existing document stock and content data stored to a central data warehouse 150 to determine if it is associated with a particular document identification value. Suffice to say, when and extractor module 140 is integrated with a document processing medium (e.g., a printer, document authoring software, high-speed inserter device), printstream management medium (e.g., printstream creation software) or analysis tool (e.g., imaging device, spectrometer) that operates upon the document, the extractor module 140 may access key information representative of the unique elements and features of the document.

When documents such as the stock certificate 110 are printed from a computing device 100 by a printing device 105, various types of analysis tools may be employed for processing the document to obtain unique stock and content data. As a first type of analysis, a high resolution imaging device and integrated radio frequency analysis tool 122 may be used to perform stock analysis 216 of the printed document. The stock analysis may include analysis of the fiber structure in high fiber content paper, analysis of the paper density that naturally occurs when the paper pulp is compressed, or analysis of paper textual features that may be intentionally introduced into the paper such as RFID (radio frequency identifier) fibers. In performing the analysis, the entire document may be analyzed, or alternatively, a specific region-of-interest of the document may be analyzed.

The latter increases the speed and efficiency of the analysis process, while the former increases the number of unique stock data points capable of being generated. However, those skilled in the art will appreciate that from an internal microscopic level of perception, even two documents appearing identical physically (e.g., same content, layout, formatting, typesetting) will differ greatly structurally even if compared against one another at a limited region-of-interest. As such, the analysis tool need only observe a limited sample of the document--i.e., analyze the rightmost bottom region of the document to within a rectangular region of 0.25 X 0.25 inches. Alternatively, the region-of-interest need not be symmetrical, but rather asymmetrical (e.g., a region enclosed by a freeform object) as defined by the operator of the analysis tool. In either way, restricting the fiber composition analysis to a smaller defined region-of-interest greatly increases the rate of processing of documents for performing such analysis, and enables feasibility of implementation within residential, commercial and industrial settings.

Another type of analysis of the document 118, 218 for collecting content data may be conducted using an imaging device 120. Exemplary imaging devices 120 for collecting content data may include, but are not limited to, scanners, optical readers, cameras, copy machines, fax machines, etc. An image of the hardcopy document may be analyzed using resolution imaging and magnification techniques to reveal unique content data points characteristic of the original document 118, as depicted with respect to the composite image. Document content data collected by the extractor module 140 operating in association with the imaging device 120 may include, but is not limited to: word count per page or per the entire document, tab spacing and indentation lengths, margin lengths, paragraph numbers, header/footer locations, image locations, line numbers, line spacing, character and/or font spacing, number of characters with and without spaces, textual color properties, text string and character coordinate information, paper stock, paper type/dimensions, and other such data descriptive of the physical characteristics of the various objects and/or characters that appear on the hardcopy document. Also, in association with the document stock and content data, the extractor module 140 may compile metadata information created by the imaging device as it processes the document 218. As will be apparent to those skilled in the art, the stock and content data collected by imaging the hardcopy document to much an extent mirrors the stock and content data collected. It will be seen later on that this is an intentional feature of the present example, for enabling advanced tracking and linking of the hardcopy version of a document to its original electronic representation or representation derived from and image and history data (via the assigned document identification value).

Those skilled in the art will recognize that various other tools not expressly presented herein may also be utilized during the first observation stock and content collection phase 52 for characterizing the physical and structural qualities of the document. For example, OCR technology may be employed for interpreting the plurality of markings resident upon a document, where the results of the interpretation may be further employed as stock and content data. Such analysis may be employed on a case-by-case basis, however, given that no single marking is sufficient in and of itself to uniquely identify a document from amongst a myriad of possibilities. The interpretation of a single element of content (e.g., words, text strings, barcodes) of a document does very little to enable one to identify a specific instance of a document against even numerous photocopied versions thereof having the same identical content. Indeed, practitioners of the art may employ their own suite of sensors or analysis tools for processing of documents in accordance with their own requirements.

In an effort to further enhance data processing rates for the above described analysis tools select stock and content data of interest need only be stored into the data structure 224. In particular, only the stock and content data most pertinent to characterizing the physical (e.g., text coordinates, word counts) and structural composition of the document (e.g., microscopic/macroscopic, fiber, chemical) within the region-of-interest need be compiled. Of course, the number of data points, measurements or calculations retained as stock and content data may be customized to fit specific processing environments, organizational capabilities or user needs. In this way, the analysis tools may be adapted accordingly to ensure higher scan rates, sampling speeds, timing settings, and signal processing for analysis of the samples under analysis.

The data structure for aggregating the stock and content data may then be communicated via a network connection to the document minutiae processing module (not shown), which may reside locally in proximity to the analysis tool via a local server or at a remote server or location.

In the illustrated examples, computers or servers such as 145, 140, 300 are intended to represent a general class of data processing device commonly used to run programming. Such a device typically utilizes general purpose computer hardware to perform its respective server processing and to control the attendant communications via the network(s). Each such server, for example, includes a data communication interface for packet data communication. The server also includes a central processing unit (CPU), in the form of one or more processors, for executing program instructions. The server platform typically includes program storage and data storage for various data files to be processed and/or communicated by the server, although the server often receives programming and data via network communications. The hardware elements, operating systems and programming languages of such servers are conventional in nature, and it is presumed that those skilled in the art are adequately familiar therewith.

In the illustrated examples, user terminal devices are generally illustrated as personal computers (PCs) or the like. Such devices are intended to represent a general class of data processing device commonly used to run client software and various end-user applications. The hardware of such personal computer platforms typically is general purpose in nature, albeit with an appropriate network connection for communication via the intranet, the Internet and/or other data networks. As known in the data processing and communications arts, each such general-purpose personal computer typically comprises a central processor, an internal communication bus, various types of memory (RAM, ROM, EEPROM, cache memory, etc.), disk drives or other code and data storage systems, and one or more network interface cards or ports for communication purposes. Of course, a personal computer or other end user data device will also have or be coupled to a display and one or more user input devices such as alphanumeric and other keys of a keyboard, a mouse, a trackball, etc. The display and user input element(s) together form a user interface, for interactive control of the computer and through the computer to control other mail processing operations. These user interface elements may be locally coupled to the computer, for example in a workstation configuration, or the user interface elements may be remote from the computer and communicate therewith via a network. The hardware elements, operating systems and programming languages of such end user data devices are conventional in nature, and it is presumed that those skilled in the art are adequately familiar therewith.

Aspects of the methods outlined above may be embodied in software, e.g. in the form of program code executable by the or other programmable device. Such software typically is carried on or otherwise embodied in a medium or media. Terms such as "machine-readable medium" and "computer-readable medium" as used herein generically refer to any medium that participates in providing instructions and/or data to a programmable processor, such as the CPU of a server or end user data device or in any of the computers controlling various mail processing equipment, for execution or other processing. Such a medium may take many forms, including but not limited to, non-volatile storage media, volatile storage media, and transmission media. Non-volatile storage media include, for example, optical or magnetic disks. Volatile storage media include dynamic memory, such as main memory or cache. Physical transmission media include coaxial cables; copper wire and fiber optics, including wired and wireless links of a network and the wires that comprise a bus within a computer or the like. Transmission media, however, can also take the form of electric or electromagnetic signals, or acoustic or light waves such as those generated during optical, radio frequency (RF) and infrared (IR) data communications. Hence, common forms of machine-readable media include, for example, a floppy disk, a flexible disk, a hard disk, a magnetic tape, any other magnetic medium, a CD or CDROM, a DVD or DVD-ROM, any other optical medium, punch cards, paper tape, any other physical medium with patterns of holes, a RAM, a PROM, an EPROM, a FLASH-EPROM, a cache memory, any other memory chip or cartridge, a carrier wave transporting data or instructions, physical links bearing such a carrier wave, or any other medium from which a computer or the like can read in order to read or recover carried information.

Various forms of machine-readable media may be involved in carrying one or more sequences of one or more instructions to a processor for execution. For example, all or portions of the software may at times be communicated through the Internet, an Intranet, a wireless data communication network, or various other telecommunication networks. Such communications, for example may serve to load the software from another computer (not shown) into the server or other platform(s) that serve as the data engine.

While the foregoing has described what are considered to be the best mode and/or other examples, it is understood that various modifications may be made therein and that the subject matter disclosed herein may be implemented in various forms and examples, and that the teachings may be applied in numerous applications, only some of which have been described herein. It is intended by the following claims to claim any and all applications, modifications and variations that fall within the true scope of the present teachings.

## Claims

1. A method of authenticating a document printed on identifiable stock, the method comprising steps of:
acquiring stock identification data from a printed hardcopy of the document by a first sensor coupled with a document processing equipment;
obtaining content data from an image of the printed hardcopy of the document by a second sensor coupled with the document processing equipment;
comparing the content data and stock identification data with associated content data and stock identification data stored in a database; and
returning an authentication result indicating whether or not the content data and stock identification data matched with the stored content data and stock identification data in the database.

2. The method according to claim 1, wherein the acquiring step includes at least one of the following steps:
acquiring the stock identification data by way of the first sensor selected from a coherent light beam interrogator, a RFID interrogator/analysis tool, or a high magnification imaging system, and
acquiring stock identification data selected from embedded conductor or semiconductor devices, material deposited or printed on the document, or fibers embedded in the document.

3. The method according to claim 1 or 2, wherein the obtaining step includes obtaining the content data by the second sensor selected from an imaging system coupled with optical character recognition and symbol/picture analysis features.

4. The method according to one of claims 1 to 3, wherein the database further includes metadata associated with the document, the metadata including information selected from a document creation date and document classification information.

5. The method according to one of claims 1 to 4, wherein the document is selected from a stock certificate, will, contract, check, mortgage or coupon.

6. The method according to one of claims 1 to 5 further comprising the following steps for preparing a document for later authentication, the document printed on identifiable stock:
acquiring stock identification data from a printed hardcopy of the document by a first sensor coupled with document processing equipment;
obtaining content data for the document;
associating the content data with the stock identification data; and
storing the content data and stock identification data in a database.

7. The method according to claim 1, wherein the obtaining step includes obtaining content data from electronic data or from an image of the printed hardcopy of the document by a second sensor coupled with the document processing equipment.

8. The method according to claim 6 or 7, wherein the storing step includes storing the content data and stock identification data in a data storage medium and file structure capable of storing searchable data accessible locally or over WAN.

9. A method of authenticating a mailpiece insert printed on identifiable stock, the method comprising steps of:
obtaining stock identification data from the mailpiece insert;
comparing the stock identification data with associated stock identification data stored in a database;
gathering address and/or addressee data stored in the database based on a result of the comparing step;
acquiring insert classification data associated with the plurality of mailpieces from the database; and
compiling a report associating the insert classification data with the obtained address and/or addressee data.

10. The method of claim 9, wherein the compiling step includes compiling a marketing report including marketing information regarding the address and/or addressee.

11. The method according to claim 9 or 10, wherein the obtaining step includes at least one of the following steps:
obtaining the stock identification data by way of a sensor selected from a coherent light beam interrogator, a RFID interrogator/analysis tool, or a high magnification imaging system, and
obtaining stock identification data selected from embedded conductor or semiconductor devices, material deposited or printed on the document, or fibers embedded in the document.

12. The method according to one of claims 9 to 11, further comprising the following steps for generating a plurality of mailpieces containing inserts on document processing equipment for later authentication of the inserts:
associating addressee and/or address data with each of a plurality of inserts printed on identifiable stock;
acquiring stock identification data from each of the plurality of inserts with a sensor;
obtaining insert classification data for the plurality of inserts;
storing the associated address and/or addressee data, acquired stock identification data and obtained insert classification data in a database; and
generating the mailpieces containing the insert on the document processing equipment.

13. The method according to claim 12, wherein the obtaining step includes obtaining insert classification from a control system of the document processing equipment or a second sensor with imaging, optical character recognition or barcode reading capability.

14. The method according to claim 12 or 13, wherein the storing step includes storing the address and/or addressee data, stock identification data and insert classification data in a data storage medium and file structure capable of storing searchable data accessible locally or over WAN.

15. The method according to one of claims 12 to 14, further comprising a step of delivering the mailpieces to the address and/or addressee listed on each respective mailpiece.

16. The method according to one of claims 12 to 15, wherein the plurality of inserts are selected from redeemable coupons, credit cards or driver's licenses.

17. The method according to one of claims 1 to 16, wherein the document processing equipment is an inserter, scanner, copier, facsimile device, or kiosk.
